# EUROPEAN PATENT SPECIFICATION

(11) **EP 2 843 972 B1**
(45) Date of publication and mention of the grant of the patent: **23.08.2017**
(21) Application number: 12877250.6
(22) Date of filing: 03.07.2012
(51) Int. Cl.: H04W 4/00, H04W 56/00, H04W 88/02, G06Q 10/10

(54) **INFORMATION SYNCHRONIZATION METHOD, DEVICE AND COMMUNICATION TERMINAL BASED ON PERSONAL INFORMATION MANAGEMENT SYSTEM**
INFORMATIONSSYNCHRONISIERUNGSVERFAHREN, VORRICHTUNG UND KOMMUNIKATIONSENDGERÄT AUF GRUNDLAGE EINES PERSÖNLICHEN INFORMATIONSVERWALTUNGSSYSTEMS
PROCÉDÉ DE SYNCHRONISATION D'INFORMATIONS, DISPOSITIF ET TERMINAL DE COMMUNICATIONS BASÉ SUR UN SYSTÈME DE GESTION D'INFORMATIONS PERSONNELLES

(30) Priority: 25.05.2012 CN 201210165555
(43) Date of publication of application: 04.03.2015
(73) Proprietor: ZTE Corporation, Guangdong Province 518057 (CN)
(72) Inventor: FANG, Wen, Shenzhen City Guangdong Province 518057 (CN); CAO, Yusheng, Shenzhen City Guangdong Province 518057 (CN); WANG, Yan, Shenzhen City Guangdong Province 518057 (CN)
(74) Representative: Novagraaf Technologies
(86) International application number: PCT/CN2012/078096
(87) International publication number: WO 2013/174060

(56) References cited:
- EP-A2- 1 534 026
- WO-A1-00/20994
- CN-A- 101 277 472
- CN-A- 101 662 734
- CN-A- 101 816 195
- US-A1- 2009 187 607
- US-A1- 2009 299 985
- US-A1- 2012 004 015

## Description

### Technical Field

The present invention relates to the communication technology field, and in particular, to an information synchronization method, apparatus and communication terminal based on a personal information management system.

### Background of the Related Art

Personal information manager (PIM), which is also referred to as a personal information management system (PIMS), can help users to manage and backup name cards, information and schedules, and so on.

At present, the PIM service is opened up by both China Mobile Communication Corporation and China Telecommunications Corporation. The related service's name of China Mobile Communication Corp is called as a phonebook butler, and its main function is mutual backup and restoring of contact information between a mobile phone and a server of an operator by wireless data transfer. The related service of China Telecommunications Corporation is called as E Surfing backup or phonebook transfer, and provides similarly mutual backup and restoring functions of address lists between a mobile phone and a server of an operator. A user can modify his/her own phonebook at a mobile phone side or a network side, and then synchronizes it to the other side.

At present, name card synchronization of PIM often initiated manually. Specifically, after a user sends an instruction of phonebook synchronization by his mobile phone or a network server, the network side responds the instruction to cause data interaction between the PIM server at the network side and the mobile phone of the user, and both the PIM server and the mobile phone can transfer name card information with each other during the interaction, thereby implementing backup and restoring functions of the phonebook.

Since a name card of one person may be stored by multiple people, a case that a certain specific number is backed up by different users often occurs in the PIM server.

After large-scale use of PIM services, a great amount of name card information is stored in the network server of the operator, and information may be transferred and exchanged between the server and the name card holder in user's mobile phone at any time as required. Meanwhile, the operator further maintains other related information of all users, such as tariff, home location, service admissibility, etc. In addition, the operator can also open up new service information for each user according to service expansion.

Massive amounts of such related service information and other information related to a user can be queried conveniently only by the user himself presently, in addition to the mobile service operator. Relatives and friends of the user cannot obtain such information of the other party in a convenient manner, especially some information, such as which services are opened by the other party, whether the number of the mobile phone has been in arrearage, etc., is imminently required to be shared among some young friends or between guardians and wards. However, there is no technology or product to solve such problem yet in the related art.

US 2009/0187607 A1 provides a system and method for profile synchronization. The profile synchronization system includes a web server, a synchronization server, and one or more mobile terminals. The web server includes subscriber accounts each containing a subscriber profile and a profile matching table, identifies, when a subscriber profile is changed at the web server, a subscriber profile in the synchronization server corresponding to the changed subscriber profile using the profile matching table, and transmits the changed subscriber profile to the synchronization server. The synchronization server includes a database to store subscriber profiles of the one or more mobile terminals in synchronization with the synchronization server, updates, when a changed subscriber profile is received from the web server, the corresponding subscriber profile, and transmits the changed subscriber profile to the one or more mobile terminals in synchronization. Each of the one or more mobile terminals updates the corresponding subscriber profile for synchronization when a changed subscriber profile is received.

US 2009/0299985 A1 provides a system, server, computer readable medium and method for receiving personal information about a first user and providing the personal information to a second user, where the first and second users are connected to corresponding first and second servers in a communication network. The method includes receiving at the second server, from the second user, a request for the personal information of the first user, accessing an address of the first user based on an address book of the second user, wherein the address book of the second user is accessible to the second server, contacting the first server based on the address of the first user and requesting from the first server the personal information of the first user, receiving the personal information of the first user from the first server, and providing the received personal information of the first user to the second user, without storing the received personal information in the second server or in an associated storage device.

US 2012/0004015 A1 provides a method and apparatus for providing an enhanced address book with an automatic management of contact entries stored therein. According to an embodiment, the invention provides a mobile terminal including a mobile terminal address book; and a controller configured to automatically receive at least one contact entry from a remote device when a predetermined event occurs, to update the mobile terminal address book based on the received at least one contact entry, and to synchronize the updated mobile terminal address book with a network address book through a network.

EP1534026 A2 provides an interoperability system serves to pass presence and supervision information relating to a user's wireless station set between a cellular communication network and an enterprise communication network, which typically includes a Private Branch Exchange system. The interoperability system functions to extend the wireless Private Branch Exchange services provided in the enterprise communication network to the cellular communication network based on the presence and supervision data provided by the interoperability system. The provision of ubiquitous service to the user, regardless of their location provides a significant advantage over existing Private Branch Exchange and cellular communication network services. In addition, the user is equipped with only one wireless station set, which can operate as a cordless Private Branch Exchange extension in the office or as a standard wireless station set outside of the office.

### Content of the Invention

A technical problem to be solved by the present invention is to provide an information synchronization method, apparatus and communication terminal based on a personal information management system so as to enable different specific users to know certain information related to services of the other party on a mobile phone interface.

The features of the method, system and user terminal according to the present invention are defined in the independent claims, and the preferable features according to the present invention are defined in the dependent claims.

In order to solve the problem described above, the present invention provides an information synchronization method based on a personal information management system comprising:
a user data server at a network side storing status information of a first user and copying the status information of the first user to a name card of the first user stored by a second user in a personal information management server; and
the PIM server synchronizing the status information of the first user in the name card of the first user to a communication terminal of the second user.

Preferably, the status information includes information about network status, service status or tariff status associated with networks, services or applications.

Preferably, the PIM server synchronizes the status information of the first user in the name card of the first user to the communication terminal of the second user according to a set synchronization strategy, wherein the synchronization strategy includes:
starting up synchronization when the status information of the first user is copied to the name card of the first user;
starting up synchronization regularly; and/or
starting up synchronization according to a synchronization request of the second user.

Preferably, the PIM server synchronizes the status information of the first user in the name card of the first user to the communication terminal of the second user in a process of synchronizing the name card stored by the second user to the communication terminal of the second user.

Preferably, the user data server is independent of a home location register, a roaming location register or an application server in a core network; or
the user data server is set in conjunction with a home location register, a roaming location register or an application server in a core network.

Preferably, when the user data server is independent of the home location register, the roaming location register or the application server in the core network, the user data server acquires and stores the status information of the user related to networks, services or applications by interacting with the home location register, the roaming location register or the application server.

Preferably, the method further comprises:
the first user setting a synchronization range of his/her own status information, which includes:
   setting a range of the status information which is allowed to be copied to the PIM server; and/or
   setting a range of second user(s) which is allowed to be copied into the PIM server.

Preferably, the method further comprises:
displaying the status information of the first user a part or in full on a display interface and/or making a prompt with ring tone or vibration when the communication of the second user has received the status information of the first user synchronized by the PIM server.

Preferably, the method further comprises:
after the second user changes the status information of the first user in the name card of the first user by the communication terminal, synchronizing the changed status information of the first user or the name card containing the status information of the first user to the PIM server.

Preferably, the method further comprises the PIM server synchronizing the changed status information of the first user to the user data server according to the received changed status information of the first user or the name card of the first user.

The present invention further provides an information synchronization apparatus based on a personal information management (PIM) system, comprising a user data server.

The user data server is configured to store status information of a first user and copy the status information of the first user to a name card of the first user stored by a second user in a PIM server.

Preferably, the user data server is further configured to receive the changed status information of the first user synchronized by the PIM server.

The present invention further provides an information synchronization apparatus based on a personal information management (PIM) system, comprising a user data server and a PIM server.

The user data server is configured to store status information of a first user and copy the status information of the first user to a name card of the first user stored by a second user in a PIM server.

The PIM server is configured to synchronize the status information of the first user in the name card of the first user to a communication terminal of the second user.

Preferably, the apparatus further comprises a synchronization authentication module.

The synchronization authentication module is configured to copy the status information of the first user to the name card stored by the second user and allowed to be copied in the PIM server according to a synchronization range, set by the first user, of his/her own status information, wherein the status information of the first user is allowed to be copied.

Preferably, the apparatus further comprises a synchronization control module.

The synchronization control module is configured to control the PIM server to synchronize the status information of the first user in the name card of the first user to the communication terminal of the second user according to a set synchronization strategy, wherein the synchronization strategy includes: starting up synchronization when the status information of the first user is copied to the name card of the first user; starting up synchronization regularly; and/or, starting up synchronization according to a synchronization request of the second user; or
the PIM server is configured to be controlled to synchronize the status information of the first user in the name card of the first user to the communication terminal of the second user in a process of synchronizing the name card stored by the second user to the communication terminal of the second user.

Preferably, the apparatus further comprises a name card management extension module in the communication terminal.

The name card management extension module is configured to extend name card records of the user to store the status information of the first user in the name card of the first user synchronized by the PIM server.

Preferably, the name card management extension module is further configured to control a display module to display the status information of the first user in part or in full on a display interface when receiving the status information of the first user synchronized by the PIM server.

Preferably, the apparatus further comprises a prompt module in the communication terminal.

The name card management extension module is further configured to trigger the prompt module to make a prompt with ring tone or vibration when receiving the status information of the first user synchronized by the PIM server.

Preferably, the apparatus further comprises an operation module and a synchronization module.

The operation module is configured to change the status information of the first user in the name card of the first user.

The name card management extension module is further configured to, after the status information of the first user in the name card of the first user has been changed, control the synchronization module to synchronize the changed status information of the first user or the name card containing the status information of the first user to the PIM server.

Preferably, the synchronization authentication module is further configured to control the PIM server to synchronize the changed status information of the first user to the user data server.

The present invention further provides a communication terminal comprising a name card management extension module.

The name card management extension module is configured to extend name card records of a user to store status information of the user in the name card of the user synchronized by a personal information management (PIM) server.

Preferably, the name card management extension module is further configured to control a display module to display the status information of the user in part or in full on a display interface when receiving the status information of the user synchronized by the PIM server.

Preferably, the communication terminal further comprises a prompt module.

The name card management extension module is further configured to trigger the prompt module to make a prompt with ring tone or vibration when receiving the status information of the first user synchronized by the PIM server.

Preferably, the communication terminal further comprises an operation module and a synchronization module.

The operation module is configured to change the status information of the user in the name card of the user.

77The name card management extension module is further configured to, after the status information of the user in the name card of the user has been changed, control the synchronization module to synchronize the changed status information of the user or the name card of the user to the PIM server.

### Brief Description of Drawings

Accompanying drawings illustrated herein are intended to provide further understanding of the present invention and constitute a portion of the present invention. Exemplary embodiments of the present invention and illustration thereof are intended to explain the present invention and do not constitute improper limitation to the present invention. In the accompanying drawings:
FIG.1 is a schematic diagram of basic principles of an embodiment of the present invention;
FIG.2 is a schematic diagram of comparison of stored information of a user data server and a PIM server;
FIG.3 is a schematic diagram of performing synchronization between a PIM server and a user data server of an embodiment of the present invention;
FIG.4 is a schematic diagram of a simplest embodiment of the present invention;
FIG.5a and 5b are schematic diagrams of an embodiment applied in a children guardianship scenario in accordance with the present invention;
FIG.6a and 6b are schematic diagrams of an embodiment applied in a user interaction scenario in accordance with the present invention;
FIG.7 is a flow chart of an example after a user, whose authority is opened, deletes and adds a related name card; and
FIG.8 is a block diagram of components of a communication terminal in accordance with an embodiment of the present invention.

### Preferred Embodiments of the Present Invention

The main object of embodiments of the present invention is to provide a method and corresponding apparatus/device to enable different specific users to query on a mobile phone interface some information, such as networks, services, tariffs, etc., of another party and some other conditions of values related to the mobile phone or entertainment services, in order to achieve the purpose of facilitating communication between users of mobile phones and transmitting specific information rapidly.

The present embodiment provides an information synchronization method based on a personal information management system which adopts the following basic technology schemes:
1. A user data server is set at a network side, and the user data server stores status information of each user. The status information specifically is the user's services related to his operator or information related to other applications, such as tariff, opening services, years of entry network, network title and network status, etc.
2. The user data server establishes data association with an existing PIM server of the operator and can copy the status information in the user data server in part or in full to a corresponding name card of the PIM server according to a phone number or the other unique feature of the user.
3. The corresponding status information in the above-mentioned name card, acted as ancillary data, is transmitted synchronously to a communication terminal, such as a mobile phone, a panel computer, etc.

The PIM server may transmit the status information in the name card to the communication terminal such as the mobile phone according to a set synchronization strategy. The set synchronization strategy includes but is not limited to: starting up synchronization when the status information of the user is copied to the corresponding name card; or starting up synchronization regularly; and/or, starting up synchronization when the mobile phone user requests actively, and so forth. In addition, the status information in the name card can also be transmitted to the communication terminal in the process of the PIM services performing the name card synchronization from the PIM server to the mobile phone.

On the basis of the above technical schemes, there may be the following preferred schemes and extension:
For the sake of clearness of description, hereinafter a user whose information is disclosed is called as a user A (or a first user), and a user who obtains the information of the user A in a PIM manner using a mobile phone is called as a user B (or a second user).

Preferred scheme 1: Preferably, the user A can set a synchronization range of his/her own status information, including: setting a range of the status information which is allowed to be copied to the PIM server; and/or, setting a range of the second user which is allowed to be copied to the PIM server.

For example, it can be set that which information of the user A can be disclosed or which part of the other users is selected to disclose the information. The setting can be completed by configurations at the mobile phone side of the user A or the network side of the operator. After the setting, only the information that the user A agrees to disclose can be synchronized by the PIM server into the mobile phones of other users to whom the user A agrees to disclose the information.

Preferred scheme 2: Preferably, a synchronization operation between the existing PIM server and a mobile phone is often initiated manually by a user. In the present invention, in order to ensure time effectiveness of transmission of some information (e.g., arrears), the PIM server is allowed to control to start up the name card synchronization with the mobile phone by a set synchronization strategy.

Preferred scheme 3: Preferably, assuming that the name card of the user A is stored in a name card folder of a mobile phone of the user B, and after the synchronization between the PIM server and the mobile phone is completed and the mobile phone of the user B receives the corresponding information of the user A, the mobile phone of the user B displays the information or makes a prompt to the user B in a specific manner or according to specific strategy. For example, when the user B checks the name card of the user A, a prompt, such as "the user's telephone charge has been overdue/the user has been out of service for 3 months" appears on the interface, or the user B is prompted by ring tone or vibration.

Preferred scheme 4: Preferably, the user B can change the specific status information of the user A by performing some operations to the name card of the user A or other objects on the mobile phone, and can transmit the change to the PIM server or further to the user data server by the PIM server, such that other users who store the name card of the user A can also see the changes caused by the user B.

Corresponding to the above technical scheme, an embodiment also provides an information transmission apparatus based on a personal information management system comprising specifically:
a user data server, which is set at a network side of an operator and stores mainly tariff, services or other related or specific status or values of each user; and
the following function modules:
   1) A synchronization control module between a PIM server and the user data server
      The synchronization control module is responsible for selecting information in the user data server and synchronizing to the PIM server. The module can exist independently or be dependent to the PIM server or the user data server. The detailed synchronization method will be described below in the particular embodiment.
   2) A synchronization authentication module between the PIM server and the user data server
      The synchronization authentication module is mainly responsible for performing authentication and control on the synchronization content of the synchronization module described above according to the synchronization range set by the user. For example, when the user A agrees to disclose his information to only the user B and does not agree to disclose his information to other users, the synchronization authentication module controls an information synchronization module between the PIM server and the user data server to update information of the user A to only the related data of the user B in the PIM server after the information synchronization module obtains the information from the data information server, that is to say, other users which store the name card of the user A cannot obtain the update.
   3) A synchronization module between the PIM server and the user
      The synchronization module is responsible for controlling synchronization of name card data between the PIM server and the mobile phone of the user B according to a certain synchronization strategy, to ensure that variations in the related information can be transferred between the user B and the PIM server in time.
   4) A name card management extension module in the mobile phone of the user B
      In the mobile phone of the user B, in order to be able to manage and display in real time attributes (e.g., arrearage information, network information, network titles, etc.) newly added by other users (the user A in the present invention) in the present invention, a phonebook of the user B is required to be different from the existing phonebook, i.e., in addition to the existing data (e.g., telephone number, birthday, email, etc.), the corresponding cells storing the attributes described herein and related modules which process display and synchronization of these cells should also be newly added into data corresponding to records of each name card.

The embodiments of the present invention will be described in detail below in conjunction with the accompanying drawings. It should be noted that the embodiments in the present invention and features in the embodiments may be combined with each other arbitrarily without conflict.

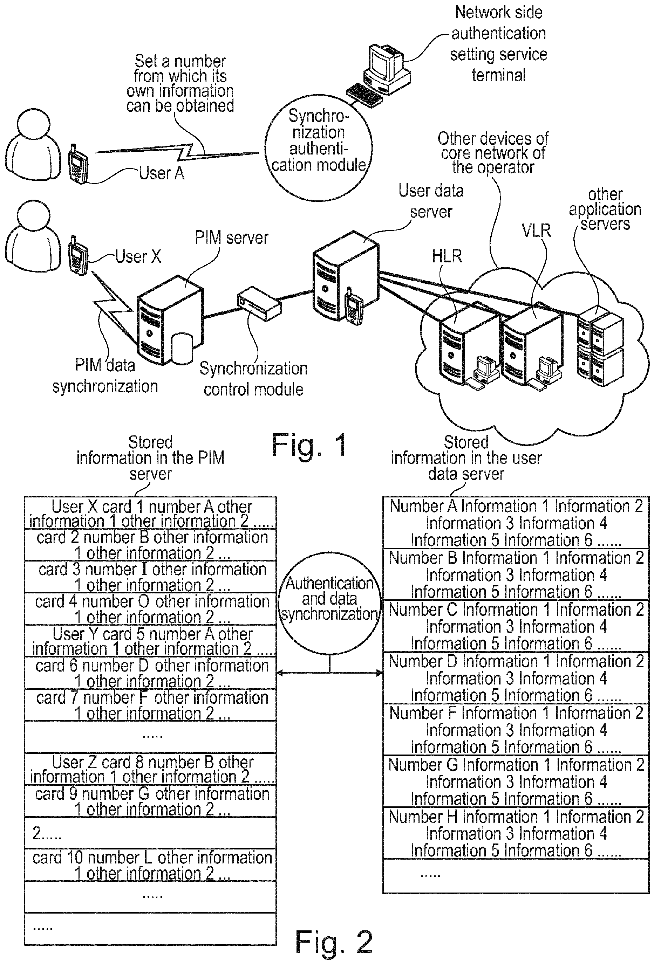

What is shown in FIG.1 is a schematic diagram of basic principles of the present invention, which shows basic principles of technical scheme of the present invention. As shown in FIG.1:
A user data server, which is set at a network side, stores data regarding to networks, services and applications of users, such as power-on status, cost status, roaming location, network age information, service status, and so on.

The server interacts with a home location register (HLR) (which stores information, such as the related home location, tariff, power on and off status, etc.) in a core network of an operator, and a roaming location register (VLR) (which stores user roaming locations that are more relevant to the present invention) interacts with other application servers, and the data regarding to networks, services and applications, etc., of users are obtained from these servers and registers of operator for storage by category under each user.

There is an information synchronization and synchronization authentication module between the existing PIM server and the user data server. The module synchronizes data of user A in the user data server to other users allowed by the PIM server in the PIM server according to requirements and settings of user A.

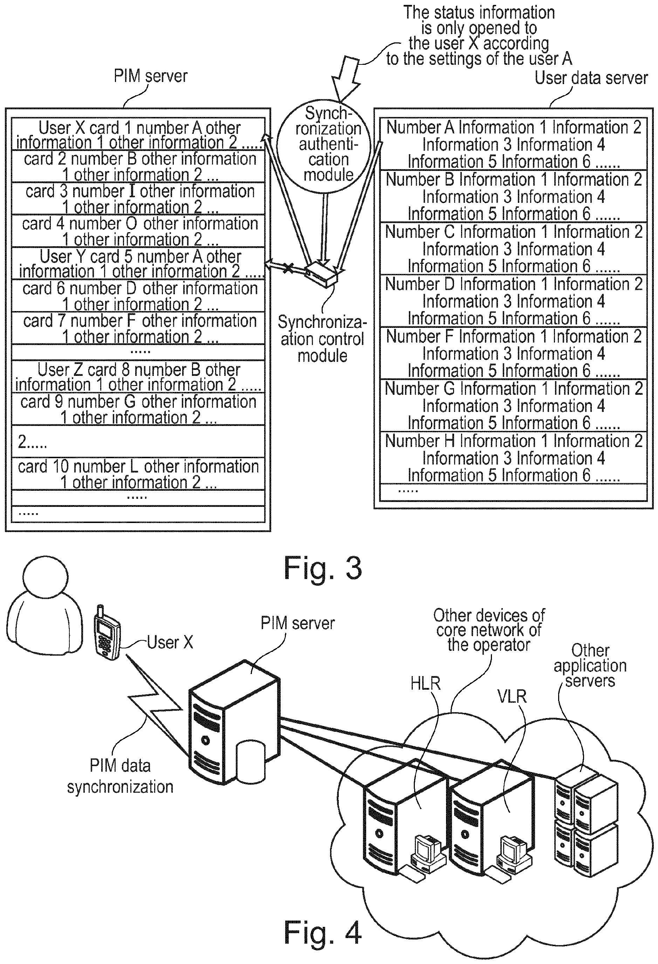

The specific introduction of a synchronization process may refer to FIG.2 and 3. As shown in FIG.2, in the user data server the described user information is stored by using (the telephone number of) each user as a mapping relationship, while in the PIM server, since each user can establish more name cards, (the telephone number of) a certain user in the user data server may appear in records of multiple users in the PIM server. For example, the phone number A in FIG.2 is saved by a user X and a user Y, respectively.

In conjunction with FIG.1, when user A hopes to disclose his/her own related information to the user X and keep it secret from the user Y, it can send a control instruction directly to the authentication module through the mobile phone side and set a specific number by which it can obtain his/her own related information, and also can make the same setting by an authentication setting server at the network side.

As shown in FIG.3, after the authentication module obtains settings of user A, when synchronization is initiated, the synchronization module is controlled to synchronize and update the information of user A in the user data server to the name card of user A in name card records of user X in the PIM server, and the name card of user A in user Y will not be updated.

In conjunction with FIG.1, afterwards, when the name card folder of the mobile phone of user X is synchronized to that in the PIM server, the mobile phone of user X can obtain the related information of user A, which is updated from the user data server to the PIM server.

If the mobile phone of user X supports displaying and processing of these related information, then user A can see information provided by the operator, such as whether user A is in arrears, whether the mobile phone is on, roaming status, network service status, etc., from the mobile phone.

The schemes 1, 2 and 3 of the present invention and the preferred schemes 1 and 3 of the present invention are involved by above description based on the basic principles of the present invention. The preferred technical schemes 2 and 4 will be described hereinafter.

It is should be noted that in the description of the embodiments described above, not all network structures in the accompanying drawings are necessary. When the system is simplified such that there is no user data server, synchronization module, authentication module and network side authentication setting service terminal, basic effects proposed in the present invention can still be achieved by using the PIM server to obtain some data directly from the network side. What is shown in FIG.4 is a schematic diagram of the simplest embodiment of the present invention.

In FIG.4, the PIM server obtains data directly form the existing server at the network side of the operator, and then synchronizes it without authentication to the mobile phone of user X. At this time, other existing servers, such as the home location register, the roaming location register and the application server, which are connected directly to the PIM server and provide the related data, are equivalent to the user data server.

Because of lack of the authentication synchronization module, the PIM server updates the status information of the user obtained from the network side to records of all name cards of each user. In such case, each user can see status information of other users from the name card holder.

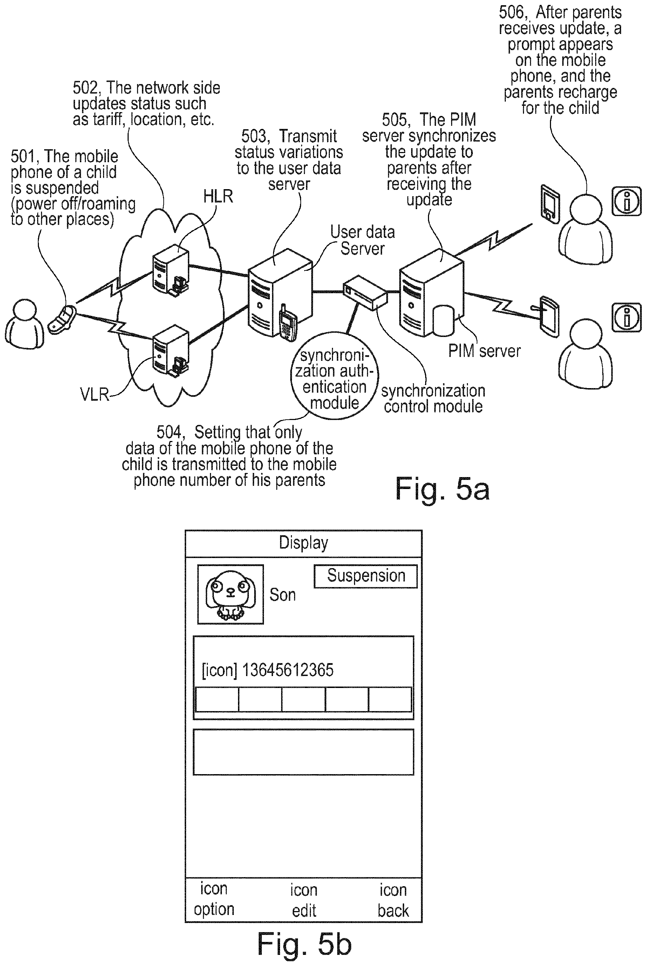

FIG.5a is a schematic diagram of an embodiment applied in a children guardianship scenario in accordance with the present invention. As shown in FIG.5a, implementation steps of the embodiment are as follows:
In step 501: a mobile phone of a child is suspended.

In step 502: the network side interacts with the mobile phone every 6 minutes (under the existing network operation situation), and updates tariff information of the mobile phone, and the information that the mobile phone of the child has been suspended is updated in the HLR.

In step 503: the HLR transmits the suspension information of the user to the user data server, which updates the status subsequent to the mobile phone number of the child to the suspension status.

In step 504: if before the previous steps are performed the authentication module is already configured to transmit the related data of the mobile phone of the child to the mobile phone number of his parents and both the parents of the child synchronize the name card of the mobile phone of the child in the PIM server, then a synchronization module is controlled to update a new status of the mobile phone number of the child to PIM records of the parents of the child in the PIM server.

In step 505: after the PIM records of the parents of the child in the PIM server are updated, bidirectional fast synchronization is initiated immediately to the parents of the child (the bidirectional fast synchronization and bidirectional slow synchronization are proprietary concepts in PIM, wherein, the bidirectional fast synchronization means that only the portion which has been changed since the last synchronization of both parties is synchronized, while the bidirectional slow synchronization means that records of both parties are all re-synchronized and the records after completion of synchronization are union of the previous records of both parties) and the updated information of the phone number of the child is synchronized to the mobile phones of the parents.

In step 506: after the mobile phones of the parents have received the update, they send a prompt immediately to the patents. The parents can see the suspension information of the mobile phone of the child when they switch on their mobile phones.

When the parents further open the name card folder, some related statuses obtained from the synchronization in the PIM server should be displayed on the name card of the child in real time as well. As shown in FIG.5b, the name card of the child is in a suspension status.

The embodiment shown in FIG.5 is an application embodiment given from the perspective of child custody, however, the specific method of the embodiment is not limited to be used in the field of children guardianship. In fact, the embodiment provides a method able to update information such as network, service status, tariff status, etc., of a user timely to other contacts and enable other contacts to learn such information of the user at any time by the mode of looking over their name card holders.

In addition, in the step 505 of the embodiment, it is proposed such a kind of PIM service strategy in which bidirectional fast synchronization is initiated by the PIM server immediately to the mobile phone of the user when the PIM records of some users are updated from the network side, in order to ensure that the user can learn the update from the mobile phone in time. It is different from the current PIM service strategy in which the update is initiated usually from the mobile phone side, and it is a typical embodiment of the preferred scheme 2 in the technical scheme of the present invention.

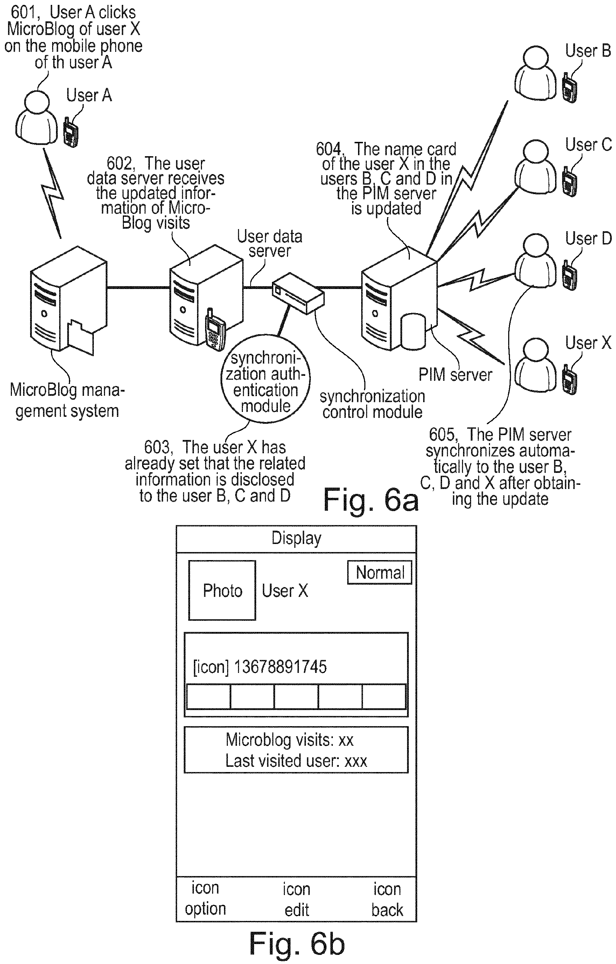

An interactive method of changing a status of the user by the related operations for the user and synchronizing the status to other users in a manner described in the present invention is proposed in the preferred scheme 4 in the technical scheme. This method is described in FIG.6a by taking update of MicroBlog in a mobile phone as an example. As shown in 6a:
In step 601: after the user A accesses the MicroBlog of the user X on the mobile phone, a MicroBlog management system records MicroBlog visits of the user X and accessing user update data.

In step 602: the MicroBlog management system transmits the visits update data of the MicroBlog to a user data server, and the user data server updates the MicroBlog accessing data to the related data region of the user X.

In steps 603-604: when the user X (or the operator) has already set that his/her own information can be updated to users B, C and D, an authentication module controls a synchronization module to transmit the related data changed by the user X in the user data server to the records of the name cards of the users B, C and D in the PIM server, such that data update is generated in the name card of X stored in name cards of u the sers B, C and D in the PIM server.

In step 605: the PIM server initiates the synchronization to the users B, C and D automatically after completing the update described above, and also initiates the synchronization to the user X if the user X stores his/her own name card in the server and his/her own mobile phone.

Then, all users B, C, D and X can learn the MicroBlog update situation of X by the mode of looking over the name card of the X on their mobile phones, as described in the diagram of a mobile phone UI example shown in FIG.6b.

The embodiment described above provides an embodiment in which interaction between users is performed based on the ideological foundation of the PIM and the name card services provided by the present invention, such that the user can know the related operation trends of other users to the users in his/her own name card holder by synchronizing the name card holder with the PIM.

The method proposed in the embodiment described above has certain application adaptability, for example, presently common network stealing vegetables, network message and personalized signature, etc., all can be implemented based on the modes of the present embodiment, thereby being able to enrich name card holder applications of the users greatly.

Wherein, the embodiments described above all acquiesce in a fact that, when the user X sets at the synchronization authentication module to open information disclosure authority to other several users, the users who are granted with the authority have already stored the name card of the user X in the PIM server.

Since the service associated with the name card in PIM services is a name card synchronization service, only when other users store the name card of the user X in the PIM server, other information of the user X can be obtained by the name card synchronization of the PIM based on the idea proposed in the present invention. Therefore, it is necessary herein to introduce a related processing example after other users delete the name card of the user X.

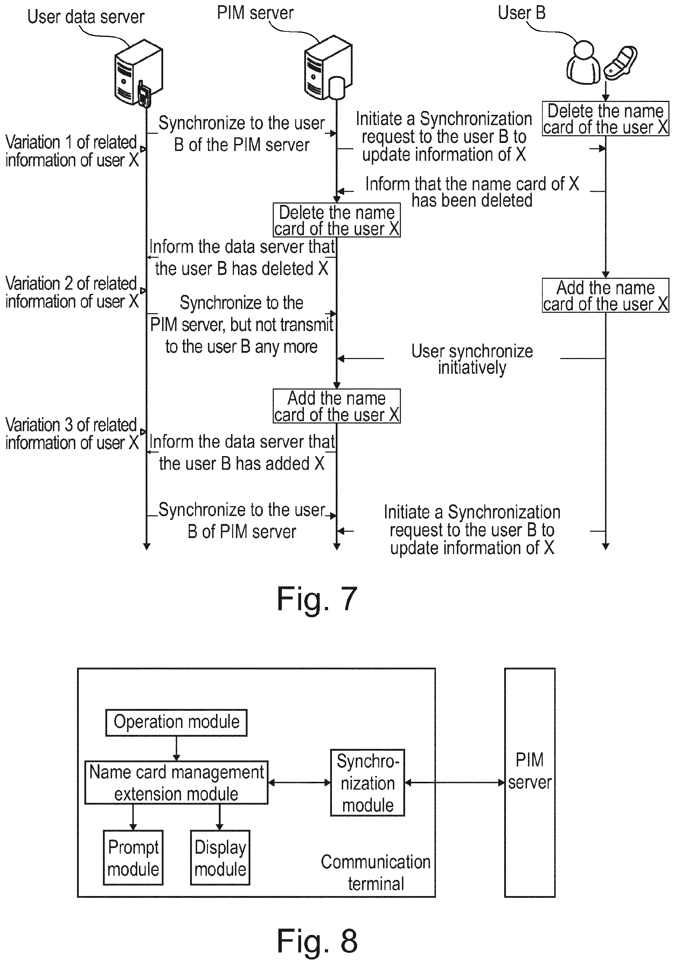

What is show in FIG.7 is a flow chart of an example after a user, whose authority is opened, deletes and adds a related name card, which comprises specifically the following main steps.

In step 1: assuming that the user X has already opened the authority of the related information disclosure to the user B, and the user B has deleted the name card of the user X at the mobile phone side and has not synchronized the operation of deleting the name card of the user X to the PIM server at the network side, that is to say, the name card of the user X is still stored in the PIM server.

In step 2: at this time, after the change of the information of the user X in the data server has occurred, the data server transmits the change to the users who are opened with the disclosure authority in the PIM server, including the name card of the user X in the name card holder of the user B in the PIM server.

In step 3: the PIM server initiates a PIM synchronization request to the user B after obtaining the update, and the user B, after receiving the synchronization request, informs the PIM server that the name card of X has already been deleted and the related information of X will not be accepted any more.

In step 4: the PIM server deletes the name card of X and informs the related user data server that the name card of X has already been deleted.

In step 5: afterwards, when the information of the user X is changed again, the PIM server will not operate on the name card holder of the user B any more after obtaining the data.

In step 6: until the user B adds the name card of the user X in the mobile phone initiatively and initiates the synchronization with the PIM server such that the name card of the user X is added in the PIM server as well, the related change of the user X is sent again to the user B through the data information server and the PIM server and is updated to the name card of X.

Additionally, as shown in FIG.1 or 4, an embodiment of the present invention further provides an information synchronization apparatus based on a personal information management system. The apparatus mainly comprises a user data server used to store status information of a first user and copy the status information of the first user to a name card of the first user stored by a second user in a personal information management (PIM) server.

Further, the user data server is further used to receive the changed status information of the first user synchronized by the PIM server.

Additionally, as shown in FIG.1, 4 and 8, an embodiment of the present invention further provides an information synchronization apparatus based on a personal information management system. The apparatus mainly comprises a user data server and a PIM server.

The user data server is used to store status information of a first user and copy the status information of the first user to a name card of the first user stored by a second user in a personal information management server.

The PIM server is used to synchronize the status information of the first user in the name card of the first user to a communication terminal of the second user.

Preferably, the apparatus further comprises a synchronization authentication module.

The synchronization authentication module is used to copy the status information of the first user to the name card stored by the second user and allowed to be copied in the PIM server according to a synchronization range, set by the first user, of his/her own status information, wherein the status information of the first user is allowed to be copied.

Preferably, the apparatus further comprises a synchronization control module.

The synchronization control module is used to control the PIM server to synchronize the status information of the first user in the name card of the first user to the communication terminal of the second user according to a set synchronization strategy, wherein the synchronization strategy includes: starting up synchronization when the status information of the first user is copied to the name card of the first user; starting up synchronization regularly; and/or, starting up synchronization according to a synchronization request of the second user;
or, the PIM server is controlled to synchronize the status information of the first user in the name card of the first user to the communication terminal of the second user in a process of synchronizing of the name card stored by the second user to the communication terminal of the second user.

Preferably, the apparatus further comprises a name card management extension module in the communication terminal.

The name card management extension module is used to extend name card records of the user to store the status information of the first user in the name card of the first user synchronized by the PIM server.

Preferably, the name card management extension module is further used to control a display module to display the status information of the first user in part or in full on a display interface when receiving the status information of the first user synchronized by the PIM server.

Preferably, the apparatus further comprises a prompt module in the communication terminal.

The name card management extension module is further used to trigger the prompt module to make a prompt with ring tone or vibration when receiving the status information of the first user synchronized by the PIM server.

Preferably, the apparatus further comprises an operation module and a synchronization module.

The operation module is used to change the status information of the first user in the name card of the first user.

The name card management extension module is further used to, after the status information of the first user in the name card of the first user has been changed, control the synchronization module to synchronize the changed status information of the first user or the name card containing the status information of the first user to the PIM server.

Preferably, the synchronization authentication module is further used to control the PIM server to synchronize the changed status information of the first user to the user data server.

Additionally, as shown in FIG.8, an embodiment of the present invention further provides a communication terminal mainly comprising a name card management extension module.

The name card management extension module is used to extend name card records of a user to store status information of the user in the name card of the user synchronized by the PIM server.

Preferably, the name card management extension module is further used to control a display module to display the status information of the user in part or in full on a display interface when receiving the status information of the user synchronized by the PIM server.

Preferably, the communication terminal further comprises a prompt module.

The name card management extension module is further used to trigger the prompt module to make a prompt with ring tone or vibration when receiving the status information of the first user synchronized by the PIM server.

Preferably, the communication terminal further comprises an operation module and a synchronization module.

The operation module is used to change the status information of the user in the name card of the user.

The name card management extension module is further used to, after the status information of the user in the name card of the user has been changed, control the synchronization module to synchronize the changed status information of the user or the name card of the user to the PIM server.

The embodiments described above are only preferred embodiments of the present invention and are not intended to limit the present invention. The present invention may further have other various embodiments.

Obviously, it is should be understood by those skilled in the art that various modules or various steps in the present invention described above may be implemented by general purpose computing devices which can be concentrated on a single computing device or distributed across a network comprised of a plurality of computing devices. Optionally, they may be implemented using computing device executable program codes and then be stored in storage devices for performing by the computing devices. In addition, in certain cases, they may perform the steps shown or described in a different order than that described herein, or they may be made into various integrated circuit modules, or a plurality of modules or step of them may be made into a single integrated circuit module. Thus, the present invention is not limited to any combination of specific hardware and software.

### Industrial Applicability

The embodiment of the present invention proposes an information synchronization method based on a PIM system, so as to, from the perspective of users, enable the user of the mobile phone to know timely from the name card holder other dynamic information of people of his/her interests, for example, the situations, such as arrearage, disconnection of network, power off and service open of persons of interest, etc.. The acquisition of such information can bring great convenience to the user of the mobile phone in terms of relatives, friends, beloved ones and custody of the vulnerable groups; meanwhile, some examples of the method can also enable users to share some network titles, network honors or network dynamic information with each other through name card holders. A new channel for attention, communication and entertainment is opened up in a name card hold module to enable to establish a new bridge for strengthening ties between younger users or between parents and children.

In addition, from the perspective of network operators, in the existing PIM system, the method has changed only the current situation of transmitting data between users and the PIM server, and for the system has added a path from which other external data enter, and has supplemented new ancillary services, and opens up new service types for operators. Moreover, the new services do not change the underlying protocol of PIM, but only make improvements on upper applications and data structures, and thus have relatively higher performance-to-price ratio and feasibility.

## Claims

1. An information synchronization method based on a personal information management system, comprising:
a user data server at a network side storing status information of a first user and copying the status information of the first user to a name card of the first user stored by a second user in a personal information management (PIM) server; and
the PIM server synchronizing the status information of the first user in the name card of the first user to a communication terminal of the second user; wherein the method further comprises:
the first user setting a synchronization range of his/her own status information, which includes:
- setting a range of the status information which is allowed to be copied to the PIM server; and/or
- setting a range of second user(s) which is allowed to be copied into the PIM server;
after the second user changes the status information of the first user in the name card of the first user in the communication terminal of the second user, synchronizing the changed status information of the first user or the name card containing the status information of the first user to the PIM server; the method **characterized in that** it further comprises:
the PIM server synchronizing the changed status information of the first user to the user data server according to the received changed status information of the first user or the name card of the first user.

2. The method according to claim 1, wherein the status information includes information about network status, service status or tariff status associated with networks, services or applications.

3. The method according to claim 1, wherein
the PIM server synchronizes the status information of the first user in the name card of the first user to the communication terminal of the second user according to a set synchronization strategy, wherein the synchronization strategy includes:
starting up synchronization when the status information of the first user is copied to the name card of the first user;
starting up synchronization regularly; and/or
starting up synchronization according to a synchronization request of the second user.

4. The method according to claim 1, wherein the PIM server synchronizes the status information of the first user in the name card of the first user to the communication terminal of the second user in a process of synchronizing the name card stored by the second user to the communication terminal of the second user.

5. The method according to claim 1, wherein
the user data server is independent of a home location register, a roaming location register or an application server in a core network; or
the user data server is set in conjunction with a home location register, a roaming location register or an application server in a core network.

6. The method according to claim 5, wherein, when the user data server is independent of the home location register, the roaming location register or the application server in the core network, the user data server acquires and stores the status information of the user related to networks, services or applications by interacting with the home location register, the roaming location register or the application server.

7. The method according to claim 1, 2 or 3, further comprising:
displaying the status information of the first user in part or in full on a display interface and/or making a prompt with ring tone or vibration when the communication terminal of the second user has received the status information of the first user synchronized by the PIM server.

8. An information synchronization system based on a personal information management system, comprising a user data server, a personal information management (PIM) server, a synchronization authentication module, an operation module in a communication terminal of a second user, a synchronization module in the communication terminal of the second user and a name card management extension module in the communication terminal of the second user, wherein the user data server is configured to store status information of a first user, and copy the status information of the first user to a name card of the first user stored by the second user in the PIM server and wherein the PIM server is configured to synchronize the status information of the first user in the name card of the first user to the communication terminal of the second user; wherein the synchronization authentication module is configured to copy the status information of the first user to the name card stored by the second user and allowed to be copied in the PIM server according to a synchronization range, set by the first user, of his/her own status information; the operation module is configured to change the status information of the first user in the name card of the first user; and the name card management extension module is further configured to, after the status information of the first user in the name card of the first user has been changed, control the synchronization module to synchronize the changed status information of the first user or the name card containing the status information of the first user to the PIM server; the information synchronization system **characterized in that** the synchronization authentication module is further configured to control the PIM server to synchronize the changed status information of the first user to the user data server.

9. The system according to claim 8, wherein the user data server is further configured to receive, from the PIM server, changed status information of the first user, which is synchronized by the PIM server.

10. The system according to claim 8, further comprising a synchronization control module, and
wherein the synchronization control module is configured to control the PIM server to synchronize the status information of the first user in the name card of the first user to the communication terminal of the second user according to a set synchronization strategy, wherein the synchronization strategy includes: starting up synchronization when the status information of the first user is copied to the name card of the first user; starting up synchronization regularly; and/or, starting up synchronization according to a synchronization request of the second user; or
wherein the PIM server is configured to be controlled to synchronize the status information of the first user in the name card of the first user to the communication terminal of the second user in a process of synchronizing the name card stored by the second user to the communication terminal of the second user.

11. The system according to claim 8 or 10, wherein the name card management extension module is configured to extend name card records of the user to store the status information of the first user in the name card of the first user synchronized by the PIM server.

12. The system according to claim 11, wherein the name card management extension module is further configured to control a display module to display the status information of the first user in part or in full on a display interface when receiving the status information of the first user synchronized by the PIM server.

13. The system according to claim 11, further comprising a prompt module in the communication terminal of the second user, and wherein the name card management extension module is further configured to trigger the prompt module to make a prompt with ring tone or vibration when receiving the status information of the first user synchronized by the PIM server.

## Patentansprüche

1. Informationssynchronisationsverfahren basierend auf einem persönlichen Informationsmanagementsystem, umfassend:
einen Benutzerdaten-Server auf Seiten eines Netzwerks, der Statusinformationen eines ersten Benutzers speichert und die Statusinformationen des ersten Benutzers auf eine Visitenkarte des ersten Benutzers, die durch einen zweiten Benutzer in einem persönlichen Informationsmanagement (PIM) Server gespeichert wird, kopiert; und
den PIM-Server, der die Statusinformationen des ersten Benutzers auf der Visitenkarte des ersten Benutzers auf ein Kommunikationsendgerät des zweiten Benutzers synchronisiert;
wobei das Verfahren darüber hinaus umfasst:
den ersten Benutzer, der einen Synchronisationsbereich seiner/ ihrer eigenen Statusinformationen einstellt, was enthält:
- Einstellen eines Bereiches der Statusinformationen, der auf den PIM-Sever kopiert werden darf; und/ oder
- Einstellen eines Bereichs von zweiten Benutzer(n), der auf den PIM-Sever kopiert werden darf;
nachdem der zweite Benutzer die Statusinformationen des ersten Benutzers auf der Visitenkarte des ersten Benutzers im Kommunikationsendgerät des zweiten Benutzers geändert hat,
Synchronisieren der geänderten Statusinformationen des ersten Benutzers oder der Visitenkarte, die die Statusinformationen des ersten Benutzers enthält, zum PIM-Server; wobei das Verfahren **dadurch gekennzeichnet, ist, dass** es darüber hinaus umfasst:
den PIM-Server, der die geänderten Statusinformationen des ersten Benutzers entsprechend den empfangenen geänderten Statusinformationen des ersten Benutzers oder der Visitenkarte des ersten Benutzers auf den Benutzerdaten-Server synchronisiert.

2. Verfahren nach Anspruch 1, wobei die Statusinformationen Informationen über den Netzwerkstatus, Servicestatus oder Tarifstatus enthalten, die den Netzwerken, Services oder Applikationen zugeordnet sind.

3. Verfahren nach Anspruch 1, wobei
der PIM-Server die Statusinformationen des ersten Benutzers auf der Visitenkarte des ersten Benutzers entsprechend einer eingestellten Synchronisationsstrategie zum Kommunikationsendgerät des zweiten Benutzers synchronisiert, wobei die Synchronisationsstrategie enthält:
Starten einer Synchronisation, wenn die Statusinformationen des ersten Benutzers auf die Visitenkarte des ersten Benutzers kopiert sind;
Regelmäßiges Starten einer Synchronisation; und/ oder
Starten einer Synchronisation entsprechend einer Synchronisationsanforderung des zweiten Benutzers.

4. Verfahren nach Anspruch 1, wobei der PIM-Server die Statusinformationen des ersten Benutzers auf der Visitenkarte des ersten Benutzers in einem Prozess des Synchronisierens der Visitenkarte, die durch den zweiten Benutzer auf dem Kommunikationsendgerät des zweiten Benutzers gespeichert wird, zum Kommunikationsendgerät des zweiten Benutzers synchronisert.

5. Verfahren nach Anspruch 1, wobei
der Benutzerdaten-Server unabhängig von einem Heimatregister, einem Roamingregister oder einem Applikationsserver in einem Kernnetzwerk ist; oder
der Benutzerdaten-Server in Verbindung mit einem Heimatregister, einem Roamingregister oder einem Applikationsserver in einem Kernnetzwerk eingestellt wird.

6. Verfahren nach Anspruch 5, wobei der Benutzerdaten-Server, wenn der Benutzerdaten-Server unabhängig von dem Heimatregister, dem Roamingregister oder dem Applikationsserver in einem Kernnetzwerk ist, die Statusinformationen des Benutzers im Zusammenhang mit Netzwerken, Services oder Applikationen speichert, indem er mit dem Heimatregister, dem Roamingregister oder dem Applikationsserver interagiert.

7. Verfahren nach Anspruch 1, 2 oder 3, darüber hinaus umfassend:
Anzeigen der Statusinformationen des ersten Benutzers ganz oder teilweise auf einer Anzeigeschnittstelle und/ oder Erzeugen einer Anzeige mit Klingelton oder Vibration, wenn das Kommunikationsendgerät des zweiten Benutzers die vom PIM-Server synchronisierten Statusinformationen des ersten Benutzers empfangen hat.

8. Informationssynchronisationssystem basierend auf einem persönlichen Informationsmanagementsystem, umfassend einen Benutzerdaten-Server, einen persönlichen Informationsmanagement (PIM) Server, ein Synchronisations-Authentifizierungsmodul, ein Betriebsmodul in einem Kommunikationsendgerät eines zweiten Benutzers, ein Synchronisationsmodul im Kommunikationsendgerät des zweiten Benutzers und ein Visitenkarten-Managementerweiterungsmodul im Kommunikationsendgerät des zweiten Benutzers,
wobei der Benutzerdaten-Server konfiguriert ist, um Statusinformationen eines ersten Benutzers zu speichern und die Statusinformationen des ersten Benutzers auf eine Visitenkarte des ersten Benutzers zu kopieren, die durch den zweiten Benutzer auf dem PIM-Server gespeichert wird, und wobei der PIM-Server konfiguriert ist, um die Statusinformationen des ersten Benutzers auf der Visitenkarte des ersten Benutzers auf das Kommunikationsendgerät des zweiten Benutzers zu synchronisieren;
wobei
das Synchronisations-Authentifizierungsmodul konfiguriert ist, um die Statusinformationen des ersten Benutzers auf die Visitenkarte zu kopieren, die durch den zweiten Benutzer gespeichert wird, und entsprechend einem Synchronisationsbereich seiner/ ihrer eigenen Sttausinformationen, der durch den ersten Benutzer eingestellt wird, in den PIM-Server kopiert werden dürfen;
das Betriebsmodul konfiguriert ist, um die Statusinformationen des ersten Benutzers auf der Visitenkarte des ersten Benutzers zu ändern; und das Visitenkarten-Managementerweiterungsmodul darüber hinaus konfiguriert ist, um, nachdem die Statusinformationen des ersten Benutzers auf der Visitenkarte des ersten Benutzers geändert worden sind, das Synchronisationmodul zu steuern, um die geänderten Statusinformationen des ersten Benutzers oder die Visitenkarte, die die Statusinformationen des ersten Benutzers enthält, zum PIM-Server zu synchronisieren;
das Informationssynchronisationssystem **dadurch gekennzeichnet ist, dass** das Synchronisations-Authentifizierungsmodul darüber hinaus konfiguriert ist, um den PIM-Server zu steuern, um die geänderten Statusinformationen des ersten Benutzers auf den Benutzerdaten-Server zu synchronisieren.

9. System nach Anspruch 8, wobei der Benutzerdaten-Server darüber hinaus konfiguriert ist, um von dem PIM-Server die geänderten Statusinformationen des ersten Benutzers, die durch den PIM-Server synchronisiert werden, zu empfangen.

10. System nach Anspruch 8, darüber hinaus ein Synchronisationssteuermodul umfassend, und
wobei das Synchronisationssteuermodul konfiguriert ist, um den PIM-Server zu steuern, um die Statusinformationen des ersten Benutzers auf der Visitenkarte des ersten Benutzers entsprechend einer eingestellten Synchronisationsstrategie zu dem Kommunikationsendgerät des zweiten Benutzers zu synchronisieren, wobei die Synchronisationsstrategie enthält:
Starten einer Synchronisation, wenn die Statusinformationen des ersten Benutzers auf die Visitenkarte des ersten Benutzers kopiert sind; regelmäßiges Starten einer Synchronisation; und/ oder Starten einer Synchronisation entsprechend einer Synchronisationsanforderung des zweiten Benutzers; oder
wobei der PIM-Server konfiguriert ist, um gesteuert zu werden, um die Statusinformationen des ersten Benutzers auf der Visitenkarte des ersten Benutzers in einem Prozess des Synchronisierens der Visitenkarte, die durch den zweiten Benutzer auf dem Kommunikationsendgerät des zweiten Benutzers gespeichert wird, zum Kommunikationsendgerät des zweiten Benutzers zu synchroniseren.

11. System nach Anspruch 8 oder 10, wobei das Visitenkarten-Managementerweiterungsmodul konfiguriert ist, um Visitenkartenaufzeichnungen des Benutzers zu erweitern, um die von dem PIM-Server synchronisierten Statusinformationen des ersten Benutzers auf der Visitenkarte des ersten Benutzers zu speichern.

12. System nach Anspruch 11, wobei das Visitenkarten-Managementerweiterungsmodul darüber hinaus konfiguriert ist, um ein Anzeigemodul zu steuern, um die Statusinformationen des ersten Benutzers ganz oder teilweise auf einer Anzeigeschnittstelle anzuzeigen, wenn die vom PIM-Server synchronisierten Statusinformationen des ersten Benutzers empfangen werden.

13. System nach Anspruch 11, darüber hinaus ein Anzeigemodul im Kommunikationsendgerät des zweiten Benutzers umfassend, und wobei das Visitenkarten-Managemebterweiterungsmodul darüber hinaus konfiguriert ist, um das Anzeigemodul auszulösen, um eine Anzeige mit Klingelton oder Vibration zu erzeugen, wenn die vom PIM-Server synchronisierten Statusinformationen des ersten Benutzers empfangen werden.

## Revendications

1. Procédé de synchronisation d'informations basé sur un système de gestion d'informations personnelles, comprenant :
un serveur de données d'utilisateur d'un côté réseau stockant des informations de statut d'un premier utilisateur et copiant les informations de statut du premier utilisateur sur une carte nominale du premier utilisateur stockée par un second utilisateur dans un serveur de gestion d'informations personnelles (PIM) ; et
le serveur PIM synchronisant les informations de statut du premier utilisateur dans la carte nominale du premier utilisateur à un terminal de communication du second utilisateur ;
dans lequel le procédé comprend en outre :
l'établissement par le premier utilisateur d'une plage de synchronisation de ses propres informations de statut, qui comportent :
- l'établissement d'une plage des informations de statut qui est autorisée à être copiée dans le serveur PIM ; et/ou
- l'établissement d'une plage de second(s) utilisateur(s) qui est autorisée à être copiée dans le serveur PIM ;
après que le second utilisateur change les informations de statut du premier utilisateur dans la carte nominale du premier utilisateur dans le terminal de communication du second utilisateur, la synchronisation des informations de statut changées du premier utilisateur ou de la carte nominale contenant les informations de statut du premier utilisateur au serveur PIM ; le procédé étant **caractérisé en ce qu'**il comprend en outre :
la synchronisation par le serveur PIM des informations de statut changées du premier utilisateur au serveur de données d'utilisateur selon les informations de statut changées et reçues du premier utilisateur ou de la carte nominale du premier utilisateur.

2. Procédé selon la revendication 1, dans lequel les informations de statut comportent des informations concernant un statut de réseau, un statut de service ou un statut de tarif associé à des réseaux, des services ou des applications.

3. Procédé selon la revendication 1, dans lequel
le serveur PIM synchronise les informations de statut du premier utilisateur dans la carte nominale du premier utilisateur au terminal de communication du second utilisateur selon une stratégie de synchronisation établie, dans lequel la stratégie de synchronisation comporte :
le démarrage d'une synchronisation lorsque les informations de statut du premier utilisateur sont copiées sur la carte nominale du premier utilisateur ;
le démarrage régulier d'une synchronisation ; et/ou
le démarrage d'une synchronisation selon une demande de synchronisation du second utilisateur.

4. Procédé selon la revendication 1, dans lequel le serveur PIM synchronise les informations de statut du premier utilisateur dans la carte nominale du premier utilisateur au terminal de communication du second utilisateur dans un processus de synchronisation de la carte nominale stockée par le second utilisateur au terminal de communication du second utilisateur.

5. Procédé selon la revendication 1, dans lequel
le serveur de données d'utilisateur est indépendant d'un registre de localisation nominal, d'un registre de localisation d'itinérance ou d'un serveur d'application dans un réseau central ; ou
le serveur de données d'utilisateur est établi conjointement à un registre de localisation nominal, un registre de localisation d'itinérance ou un serveur d'application dans un réseau central.

6. Procédé selon la revendication 5, dans lequel, lorsque le serveur de données d'utilisateur est indépendant du registre de localisation nominal, du registre de localisation d'itinérance ou du serveur d'application dans le réseau central, le serveur de données d'utilisateur acquiert et stocke les informations de statut de l'utilisateur liées à des réseaux, des services ou des applications par interaction avec le registre de localisation nominal, le registre de localisation d'itinérance ou le serveur d'application.

7. Procédé selon la revendication 1, 2 ou 3, comprenant en outre :
l'affichage des informations de statut du premier utilisateur en tout ou partie sur une interface d'affichage et/ou la réalisation d'une invite avec une sonnerie ou une vibration lorsque le terminal de communication du second utilisateur a reçu les informations de statut du premier utilisateur synchronisées par le serveur PIM.

8. Système de synchronisation d'informations basé sur un système de gestion d'informations personnelles, comprenant un serveur de données d'utilisateur, un serveur de gestion d'informations personnelles (PIM), un module d'authentification de synchronisation, un module de fonctionnement dans un terminal de communication d'un second utilisateur, un module de synchronisation dans le terminal de communication du second utilisateur et un module d'extension de gestion de carte nominale dans le terminal de communication du second utilisateur,
dans lequel le serveur de données d'utilisateur est configuré pour stocker des informations de statut d'un premier utilisateur, et copier les informations de statut du premier utilisateur sur une carte nominale du premier utilisateur stockée par le second utilisateur dans le serveur PIM et dans lequel le serveur PIM est configuré pour synchroniser les informations de statut du premier utilisateur dans la carte nominale du premier utilisateur à un terminal de communication du second utilisateur ;
dans lequel le module d'authentification de synchronisation est configuré pour copier les informations de statut du premier utilisateur sur la carte nominale stockée par le second utilisateur et autorisées à être copiées dans le serveur PIM selon une plage de synchronisation, établie par le premier utilisateur, de ses propres informations de statut ;
le module de fonctionnement est configuré pour changer les informations de statut du premier utilisateur dans la carte nominale du premier utilisateur ; et le module d'extension de gestion de carte nominale est en outre configuré, après que les informations de statut du premier utilisateur dans la carte nominale du premier utilisateur ont été changées, pour commander au module de synchronisation de synchroniser les informations de statut changées du premier utilisateur ou la carte nominale contenant les informations de statut du premier utilisateur au serveur PIM ; le système de synchronisation d'informations étant **caractérisé en ce que** le module d'authentification de synchronisation est en outre configuré pour commander au serveur PIM de synchroniser les informations de statut changées du premier utilisateur au serveur de données d'utilisateur.

9. Système selon la revendication 8, dans lequel le serveur de données d'utilisateur est en outre configuré pour recevoir, en provenance du serveur PIM, des informations de statut changées du premier utilisateur, qui sont synchronisées par le serveur PIM.

10. Système selon la revendication 8, comprenant en outre un module de commande de synchronisation, et
dans lequel le module de commande de synchronisation est configuré pour commander au serveur PIM de synchroniser les informations de statut du premier utilisateur dans la carte nominale du premier utilisateur au terminal de communication du second utilisateur selon une stratégie de synchronisation établie, dans lequel la stratégie de synchronisation comporte : le démarrage d'une synchronisation lorsque les informations de statut du premier utilisateur sont copiées sur la carte nominale du premier utilisateur ; le démarrage régulier d'une synchronisation ; et/ou, le démarrage d'une synchronisation selon une demande de synchronisation du second utilisateur ; ou
dans lequel le serveur PIM est configuré pour être commandé afin de synchroniser les informations de statut du premier utilisateur dans la carte nominale du premier utilisateur au terminal de communication du second utilisateur dans un processus de synchronisation de la carte nominale stockée par le second utilisateur au terminal de communication du second utilisateur.

11. Système selon la revendication 8 ou 10, dans lequel
le module d'extension de gestion de carte nominale est configuré pour étendre des enregistrements de carte nominale de l'utilisateur afin de stocker les informations de statut du premier utilisateur dans la carte nominale du premier utilisateur synchronisées par le serveur PIM.

12. Système selon la revendication 11, dans lequel le module d'extension de gestion de carte nominale est en outre configuré pour commander à un module d'affichage d'afficher les informations de statut du premier utilisateur en tout ou partie sur une interface d'affichage lors de la réception des informations de statut du premier utilisateur synchronisées par le serveur PIM.

13. Système selon la revendication 11, comprenant en outre un module d'invite dans le terminal de communication du second utilisateur, et dans lequel le module d'extension de gestion de carte nominale est en outre configuré pour déclencher le module d'invite afin de réaliser une invite avec une sonnerie ou une vibration lors de la réception des informations de statut du premier utilisateur synchronisées par le serveur PIM.
